# EUROPÄISCHE PATENTSCHRIFT

(11) **EP 0 739 321 B1**
(45) Veröffentlichungstag und Bekanntmachung des Hinweises auf die Patenterteilung: **06.05.1998**
(21) Anmeldenummer: 95903706.0
(22) Anmeldetag: 29.12.1994
(51) Int. Cl.: C04B 26/26, C08L 95/00, E01C 7/08

(54) **BITUMENFREIES BINDEMITTEL, BAUSTOFFMISCHUNG UND WÄSSRIGE BINDEMITTELEMULSION**
BITUMEN-FREE BINDER, BUILDING MATERIAL MIXTURE AND AQUEOUS EMULSION BINDER
LIANT EXEMPT DE BITUME, MELANGE DE MATERIAUX DE CONSTRUCTION ET EMULSION LIANTE AQUEUSE

(30) Priorität: 30.12.1993 AT 2654/93
(43) Veröffentlichungstag der Anmeldung: 30.10.1996
(73) Patentinhaber: Krems Chemie Aktiengesellschaft, A-3500 Krems (AT)
(72) Erfinder: SYCHRA, Marcel, A-3500 Krems (AT); STEINDL, Harald, 3506 Hollenburg 78 (AT)
(74) Vertreter: Pfeifer, Otto, Dipl.-Ing.
(86) Internationale Anmeldenummer: AT9400207
(87) Internationale Veröffentlichungsnummer: WO9518276

(56) Entgegenhaltungen:
- Derwent's abstract, Nr. 93-43271/05, Woche 9305; & SU,A,1715812, (GNATEIKO V Z ET AL), 1992-09-29

## Beschreibung

Die Erfindung bezieht sich auf ein bitumenfreies Bindemittel, insbesondere für Baustoffe, wie Beläge für Verkehrsflächen, Sportflächen od.dgl., für Dichtungsmassen, Isolieranstriche und Oberflächenbeschichtungen, sowie auf eine Baustoffmischung mit diesen Bindemitteln und auf eine wäßrige Emulsion mit diesen Bindemitteln.

Baustoffe müssen, je nach ihrem Einsatzzweck, hohe Aufnahmefähigkeit für Zugkräfte, Druckkräfte, Abriebkräfte oder auch gegen Inanspruchnahme durch chemische Mittel, wie beispielsweise Steinsalz oder Harnstoff, als auch Beständigkeit gegen UV-Strahlen aufweisen. Neben diesen Eigenschaften wird vielfach gewünscht, daß die Bindemittel möglichst transparent sind und keine Eigenfarbe aufweisen. Dadurch ist unter anderem die Möglichkeit gegeben, mit einem relativ geringen Anteil von Pigmenten eine Farbgebung der Baustoffe zu erreichen.

Bitumenhältige Bindemittel für Baustoffe sind seit langem literaturbekannt, wobei das Bindemittel einen hohen Gehalt an Kohlenstoff bzw. an höherkondensierten Kohlenwasserstoffen aufweist, so daß es selbst, bzw. auch die Mischungen mit demselben, von schwarzer Farbe sind. Dadurch wird sowohl der erforderlichen farblichen Vielfalt bei Bauvorhaben als auch den für Verkehrsflächen bzw. Sportflächen erforderlichen Farben mit höherem Reflexionsvermögen als schwarz nicht Rechnung getragen.

Es sind zahlreiche Kunststoffe bekannt, die für sich allein oder gemeinsam mit anorganischen Bindemitteln, wie beispielsweise Kalk oder Zementen, als Binder für Baustoffmischungen dienen.

Aus der US-A-4 374 946 ist eine Mischung zur Füllung von Betonfugen bekannt, die neben ataktischem Polypropylen-Kautschuk auch Tallpech aufweist. Eine derartige Mischung soll lediglich ein gutes Haftvermögen gegenüber Beton aufweisen, jedoch sind mit Ausnahme der flexiblen Dehnbarkeit solche Eigenschaften, wie Abriebbeständigkeit, Zugfestigkeit, Druckfestigkeit oder dgl. von untergeordneter Bedeutung.

Aus der US-A-3 951 676 ist eine Baustoffmischung bekannt, die mit einer Wasser-in-Öl-Emulsion aufgebaut ist, welche Bitumen und ein Zinn-, Magnesium-, Kupfer-, Aluminium- oder Eisensalz eines Tallöles enthält.

Aus der WO-A-89/06259 ist eine Mischung aus einem natürlichen Harz, einem künstlichen Harz, wie z.B. thermoplastische Elastomere, Polyethylen, Ethylvinylacetat, Polypropylen, Polybutylen, Nitrile, Butadien-Styrol- oder Butadien-Isopren-Copolymere sowie mit einem Öl, Paraffinöl und einem Dickungsmittel, z.B. Hydroxymethylzellulose od.dgl., für Straßenbeläge bekannt. Eine derartige Mischung kann wiederverwertet werden. Auf Grund der hellen Farbe ist auch eine Einfärbung möglich. Durch den zwingend vorgesehenen Einsatz von Schmier- und Verdickungsmitteln wird der Einsatz derartiger Mischungen auf Sonderfälle für Beläge, bei welchen ein höherer Abrieb und erhöhtes Gleitverhalten von untergeordneter Bedeutung sind, beschränkt.

Aus der SU-A-1096268 ist eine Bindemittelmischung für Straßenbau aus Indol-Cumaron-Harz, Tallölpech, niedermolekularem Polyethylen und Polyethylenimin bekannt, in welcher 44,5-59,8 % Tallölpech die plastifizierende Komponente darstellen.

Aus der SU-A-920089 ist eine Bindemittelmischung für Straßenbau aus Carbamidharz und Tallölpech bekannt, in welcher 50-60 % Tallölpech zur Verminderung der Wasseraufnahme des Bindemittels eingesetzt werden.

Aus der SU-A-1528760 ist eine Bindemittelmischung für Straßenbau aus Tallölpech und ataktischem Polypropylen und aus der SU-A-1717578 mit Butadien-Styrol-Copolymer bekannt. Aus der EP-A-0 304 767 ist ein Tall-, Holz- oder Terpentinharz bzw. deren Derivate enthaltendes Bindemittel für Straßenbau bekannt.

Aus der AT-B-394 849 ist ein Bindemittel bzw. eine Baustoffmischung oder eine Emulsion aus calciumgehärtetem Tallölpech, thermoplastischen Kunststoffen und synthetischen Ölen bekannt.

Wie alle organischen Stoffe sind auch die oben genannten Bindemittel der Alterung unterworfen. Diese führt zu einer Verhärtung und schließlich zu einem Verlust der Bindekraft. Die Alterung der Bindemittel ist auf physikalische und chemische Einflüsse zurückzuführen. Dabei spielen neben der Zeit die Einwirkung von Wärme, Luftsauerstoff und Licht eine erhebliche Rolle. Zur Ermittlung des Alterungsausmaßes und des Gewichtsverlustes wird das Bindemittel einer Erhitzungsprüfung in dünner Schicht bei 163°C (325°F) während 5 h unterworfen (DIN 1995 und ASTM D 1754-67T), vgl. Handbuch des Straßenbaus, Band 2, herausgegeben von B. Wehrer, P. Siedke und K.H. Schulze, Springer Verlag.

Die vorliegende Erfindung hat sich zur Aufgabe gesetzt, ein Bindemittel bzw. eine Baustoffmischung oder eine Emulsion zu schaffen, die möglichst transparent ist, somit eine gute Möglichkeit zur Einfärbung mit Pigmenten vorliegt, die den Einsatz von natürlich vorkommenden Stoffen vorsieht, die als Nebenprodukte bei chemischen Aufschlüssen anfallen. Gleichzeitig soll gegenüber den bislang eingesetzten Produkten eine erhöhte thermooxidative Stabilität und Alterungsbeständigkeit erreicht werden.

Seitdem das Sulfatzellstoffverfahren im vorigen Jahrhundert eingeführt wurde, fällt aus dem Verfahren eine sogenannte Schwarzlauge an, aus der Tallöl gewonnen werden kann. Das Tallöl besteht im wesentlichen aus Harz- und Fettsäuren und unverseifbaren Stoffen. Je nach Herkunftsort des Tallöles sind in engeren Grenzen unterschiedliche Zusammensetzungen gegeben, wobei die Eigenschaften im wesentlichen erhalten bleiben. Eine Aufarbeitung des Tallöles erfolgt üblicherweise auf destillativem Wege, wobei, um eine möglichst schonende Behandlung zu realisieren, unter Vakuum gearbeitet wird. Es können hiebei Fettsäuren, Harzsäuren und verschiedene Zwischenfraktionen gewonnen werden. Als Rückstand verbleibt das sogenannte Tallölpech, das entweder als solches oder nach Härtung durch Behandlung mit Sauerstoff, Kalk usw. zur Herstellung von Kunststoffplatten, Druckfarben, Dachpappen, Bindemittel in der Baustoffindustrie oder dgl. Verwendung finden kann.

Produkte, welche mit gehärtetem Tallöl als alleinigem Bindemittel aufgebaut sind, weisen schlechte mechanische Eigenschaften, wie z.B. Abrieb, Wärmebeständigkeit, Wiederverarbeitbarkeit, aber auch gegebenenfalls, wenn mit Sauerstoff gehärtet wurde, eine dunkle Farbe auf. Eine geringfügige Verbesserung, vor allem der mechanischen Eigenschaften, wie z.B. Abrieb, kann durch Einsatz von polymermodifiziertem Tallölpech bzw. polymermodifiziertem, gehärtetem Tallölpech erreicht werden. Als Polymerkomponente können Mono- bzw. Copolymerisate unterschiedlicher Molekulargröße von z.B. Ethylen, Propylen, Isobutylen, Butadien, Styrol und Acrylnitril, aber auch natürlicher Kautschuk verwendet werden.

Diese Produkte weisen jedoch eine für Straßenbaubindemittel ungenügende Alterungsbeständigkeit auf. Das Ausmaß der Änderung der Eigenschaften, das die oben genannten Bindemittel bei der Heißmischgutvorbereitung und -verarbeitung wie auch bei der "Zeitalterung" erleiden, verursacht teilweise Probleme beim Mischguteinbau und führt zu Verkehrsflächen od.dgl. mit schlechten mechanischen Eigenschaften.

Das erfindungsgemäße bitumenfreie Bindemittel, insbesondere für Baustoffe wie Beläge für Verkehrsflächen, Sportflächen oder dgl., für Dichtungsmassen, Isolieranstriche und Oberflächenbeschichtungen besteht aus 50-100 Gew.-%, insbesondere 60-90 Gew.-% eines mit 0,1-40 Gew.-% S, insbesondere 1-10 Gew.-% S, und 0-20 Gew.-% ZnO, insbesondere mit 0-10 Gew.-% ZnO, 0-10 Gew.-% Vulkanisationsbeschleunigern, -reglern, Oxidationsinhibitoren und/oder Haftvermittlern, insbesondere 0,1-3 Gew.-% Vulkanisationsbeschleunigern, -reglern, Oxidationsinhibitoren und/oder Haftvermittlern modifizierten Tallölpeches, 0-25 Gew.-% Kunststoffen, insbesondere 5-15 Gew.-% Kunststoffen, insbesondere thermoplastischen Kunststoffen, sowie 0-20 Gew.-% Ölen, insbesondere 5-10 Gew.-% Ölen, insbesondere naphthenischen Ölen.

Ein solcherart modifiziertes Tallölpech, im folgenden "vulkanisiertes Tallöllpech" genannt, weist gegenüber dem unbehandelten bzw. gehärteten, insbesondere calciumgehärteten Tallölpech erhöhte thermooxidative Stabilität und Alterungsbeständigkeit auf und stellt ein für Baustoffe wie Beläge für Verkehrsflächen, Sportflächen od.dgl., für Dichtungsmassen, Isolieranstriche und Oberflächenbeschichtungen geeignetes Produkt dar. Durch den Einsatz von vulkanisiertem Tallölpech wird ein Produkt, das als Nebenprodukt bei der Aufbereitung von harzhältigen Hölzern entsteht, einem hochwertigen Einsatzzweck zugeführt, wobei fossile Reserven, sei es in Form von Bitumen oder Asphalten oder auch von Erdgas und Erdölen, aus welchen künstliche Bindemittel hergestellt werden, geschont werden können. Durch den Einsatz von vulkanisiertem Tallölpech wird zum Unterschied von gehärteten Tallölpechen, insbesondere jenen, die mit Sauerstoff oder mit Calcium gehärtet werden, eine besonders schonende chemische Umsetzung erreicht, wobei färbende Nebenprodukte, z.B. Oxidationsprodukte, besonders wirksam und mit geringem Aufwand vermieden werden können, und außerdem Produkte mit erhöhter thermooxidativer Stabilität, Alterungsbeständigkeit und besseren mechanischen und physikalischen Eigenschaften, wie z.B. Abrieb oder Haftung, erhalten werden.

Weist das Bindemittel einen Gehalt von 50,0 Gew.-% bis 95,0 Gew.-% an dem vulkanisierten Tallölpech auf, dann läßt sich auf Grund der reaktiven Komponenten des Tallölpeches im Gemisch mit nachstehend beschriebenen Komponenten ein Kolloidalsystem, vergleichbar zu Bitumen, aufbauen.

Liegt ein Gehalt zwischen 60,0 Gew.-% und 95 Gew.-% des vulkanisierten Tallölpeches vor, dann ergibt sich eine Mischung, die sowohl in ihren Eigenschaften für Baustoffe, wie Beläge für Verkehrsflächen, Sportflächen od.dgl., für Dichtungsmassen, Isolieranstriche und Oberflächenbeschichtungen als auch in ihrer Einfärbbarkeit, z.B. mit hellen Pigmenten, besonders vorteilhaft ausgestaltet ist, da lediglich ein geringer Gehalt an Pigmenten vorliegen muß.

Liegen 2,0 Gew.-% bis 25,0 Gew.-% an Kunststoffen in der Mischung vor, so kann auf Grund der eingebrachten Kunststoffe der Baustoff entsprechend den gewünschten Eigenschaften modifiziert werden, wobei gleichzeitig neben einer Verbesserung der Abriebeigenschaften und der Haftung das Elastizitätsverhalten, das Kälteverhalten sowie auch die Transparenz des ungefärbten Bindemittelfilmes erhöht werden können.

Durch einen Zusatz von bis zu 20,0 Gew.-% Ölen, insbesondere naphthenischen Ölen, wird das Bindemittel hydrophobiert und weist eine noch bessere Auslaugbeständigkeit gegen Niederschlagswässer auf. Zusätzlich wird die chemische Beständigkeit gegenüber anorganischen Säuren und Laugen sowie deren Salzen bedeutend erhöht. Liegt der Gehalt der Öle zwischen 5,0 Gew.-% und 10,0 Gew.-%, so kann die Wärmestandfestigkeit (ERK) bei geringerem Gehalt an Bindemittel beibehalten werden. Bei höherer Dosierung wirkt die Ölkomponente lediglich als Weichmacher, womit der Erweichungspunkt absinkt.

Liegen in den bitumenfreien Bindemitteln zwischen 2,0 Gew.-% und 25,0 Gew.-% Styrolbutadienstyrolcopolymere (SBS) vor, so wird das elastische Verhalten verbessert. Durch die Kombination von vulkanisiertem Tallölpech, SBS und Öl läßt sich das Bindemittel so flexibel einstellen, daß mit Gummimehl und Zuschlagsstoffen z.B. ein elastischer Sportplatzbelag herstellbar ist.

Kommen anorganische Pigmente zum Einsatz, so wird die Lebensdauer des Bindemittels sowohl hinsichtlich Farbbeständigkeit als auch UV-Beständigkeit zusätzlich erhöht.

Eine Baustoffmischung, die mit dem erfindungsgemäßen Bindemittel aufgebaut ist, kann gemäß einem weiteren Merkmal der vorliegenden Erfindung 20,0 Gew.-% bis 97,0 Gew.-%, insbesondere 80,0 Gew.-% bis 97,0 Gew.-%, anorganische Zuschlagsstoffe mit einer maximalen Korngröße von 2 mm bis 32 mm, insbesondere 4 mm bis 16 mm, aufweisen. Das erfindungsgemäße Bindemittel ist mit anorganischen Zuschlagsstoffen verträglich und benetzt diese trotz des teilweise hydrophoben Verhaltens der Zuschlagsstoffe hervorragend, so daß mit anorganischen Zuschlagsstoffen besonders tragfähige Beläge erhalten werden können, wobei auf Grund der Zusammensetzung des Bindemittels ein besonders günstiges Verhältnis zwischen anorganischen Zuschlagsstoffen und Bindemittel eingehalten werden kann, das der erfindungsgemäßen Baustoffmischung einen besonders breiten Einsatz ermöglicht.

Enthält die Baustoffmischung 10,0 Gew.-% bis 80,0 Gew.-%, insbesondere 15,0 Gew.-% bis 25,0 Gew.-% Gummigranulat, mit einer maximalen Korngröße von 1 mm bis 50 mm, insbesondere 3 mm bis 5 mm, so kann ein Belag erhalten werden, dessen Reflexionsverhalten, insbesondere für Sportplätze, z.B. Tennisplätze, besonders geeignet ist, wobei gleichzeitig eine den Eigenschaften eines Altgummis entsprechende Einsatzmöglichkeit gegeben ist, ohne daß eine thermische Verwertung und damit gleichzeitig Belastung der Umwelt mit CO₂ verursacht wird.

Das erfindungsgemäße Bindemittel kann bei Temperaturen von 100 bis 200°C auf Materialien wie Beton, bituminöse Flächen usw. aufgesprüht werden, bzw. können vorhandene Fugen damit vergossen werden, wobei eine hervorragende Haftung und Beständigkeit auch bei tiefer Temperatur erzielt wird.

Das erfindungsgemäße vulkanisierte Tallölpech - mit den oder ohne die oben erwähnten weiteren Zusatzstoffe wie Pigmente, Kunststoffe, Öl usw. - ist auch als wäßrige Emulsion mit einem Gehalt von 30,0 Gew.-% bis 85,0 Gew.-%, insbesondere 60,0 Gew.-% bis 65,0 Gew.-% des Bindemittels und 2,0 Gew.-% bis 5,0 Gew.-%, insbesondere 3,0 Gew.-% Tallöl oder anderen geeigneten Emulgatoren sowie weiteren Zusatzstoffen, Rest Wasser, einsatzfähig. Liegen in der oben beschriebenen Emulsion Füllstoffe zwischen 5 und 50 Gew.-% vor, so kann aufgrund der eingebrachten Füllstoffe die Emulsionsviskosität auf die verlangte Viskosität eingestellt werden. Die Füllstoffe können pulverförmig oder als sogenannter Slurry in die Emulsion eingebracht werden. Ist zur Erzielung der gewünschten mechanischen und physikalischen Eigenschaften des fertigen aufgetrockneten Bindemittels ein Zusatz von Kunststoff notwendig, so kann dieser wie oben beschrieben dem vulkanisierten Tallölpech vor der Emulgierung beigemischt werden, oder aber auch in Form einer wäßrigen Polymerdispersion mit 1 bis 30 Gew.-%, insbesondere 5 bis 15 Gew.-% eines Kunststoffes (atro/atro) während oder nach der Emulgierung dem vulkanisierten Tallölpech zugesetzt werden.

Die wäßrige Emulsion kann noch 0,01 Gew.-% bis 0,1 Gew.-% Lauge, insbesondere Kalilauge enthalten, wodurch eine besondere Langzeitlagerstabilität sichergestellt ist.

Die Herstellung des erfindungsgemäßen vulkanisierten Tallölpeches kann nach einem weiteren Aspekt der vorliegenden Erfindung zweckmäßig dadurch erfolgen, daß man 100 Gew.-Teile Tallölpech mit 0,1 bis 40 Gew.-Teilen Schwefel, insbesondere 1 bis 10 Gew.-Teilen Schwefel, bei 80-250°C, insbesonderer 100-160°C, modifiziert. Dieses Modifizieren kann durch gemeinsames Erhitzen der Komponenten unter gleichzeitigem Rühren vorgenommen werden. Ein Zusatz von bis zu 20 Gew.-Teilen Zinkoxid, insbesonderer 1 bis 10 Gew.-Teilen Zinkoxid je 100 Gew.-Teile Tallölpech, zusätzlich zur Schwefelzugabe, kann die erwünschten Eigenschaften des vulkanisierten Tallölpeches noch verbessern.

Im folgenden wird die Erfindung anhand der Beispiele näher erläutert.

Die Eigenschaften der erfindungsgemäßen bitumenfreien Bindemittel werden mit den dem Stand der Technik entsprechenden bitumenfreien Bindemitteln wie Tallölpech und Tallölpech gehärtet bzw. polymermodifiziertes Tallölpech und Tallölpech gehärtet verglichen.

### Beispiel 1:

100 Gewichtsteile Tallölpech werden mit 2 Gewichtsteilen Schwefel 1 Stunde unter Rühren auf 120°C erhitzt.

### Beispiel 2:

100 Gewichtsteile Tallölpech werden mit 2 Gewichtsteilen Schwefel 1 und 3 Teilen ZnO 1 Stunde unter Rühren auf 160°C erhitzt.

### Beispiel 3:

100 Gewichtsteile Tallölpech werden mit 10 Gewichtsteilen Schwefel 1 und 5 Gewichtsteilen ZnO unter Rühren 1 Stunde auf 120°C und anschließend 1 Stunde auf 160°C erhitzt.

In der Tabelle 1 werden die Versuchsdaten wie Erweichungspunkt, Penetration und thermooxidative Stabilität der in den Beispielen 1-3 und in den Vergleichsbeispielen 1 und 2 genannten bitumenfreien Bindemittel verglichen:

**Tabelle 1**

| | EP (°C) | Penetration | RTFOT-Test, EP und Verarbeitbarkeit nach 2,5h/200°C |
|---|---|---|---|
| Vergleichsbeispiel 1 - Tallölpech | 26 | >400 | >100°C; spröde, nicht verarbeitbar |
| Vergleichsbeispiel 2 - Tallölpech gehärtet | 44 | 190 | >100°C; spröde, nicht verarbeitbar |
| Beispiel 1 | 30 | 320 | 56°; gut verarbeitbar |
| Beispiel 2 | 30 | 320 | 52°; gut verarbeitbar |
| Beispiel 3 | 31 | 300 | 55°; gut verarbeitbar |

Die in den Beispielen 1 bis 3 aufgeführten bitumenfreien Bindemittel weisen gegenüber den Vergleichsbeispielen 1 und 2 eindeutig erhöhte thermooxidative Stabilität auf und können auch nach hoher thermischer Belastung verarbeitet werden.

### Beispiel 4:

90 Gewichtsteile des gemäß Beispiel 1 hergestellten bitumenfreien Bindemittels werden mit 5 Gewichtsteilen eines Styrolbutadienstyrolcopolymers (Fa. Shell, Cariflex TR-1101, in der Folge als SBS bezeichnet) und 5 Gewichtsteilen eines Mineralöls mit Siedebereich 335 bis 527°C (nachfolgend als "Öl" bezeichnet) in einem Werner-Pfleiderer-Doppelschneckenmischer vermischt.

### Beispiel 5:

86 Gewichtsteile des gemäß Beispiel 2 hergestellten bitumenfreien Bindemittels werden mit 7 Gewichtsteilen SBS und 7 Gewichtsteilen Öl vermischt.

In der Tabelle 2 werden die Kenndaten wie Erweichungspunkt, Penetration, Duktilität, Brechpunkt und thermooxidative Stabilität der in den Beispielen 4 und 5 und in den Vergleichsbeispielen 3 und 4 genannten bitumenfreien Bindemittel verglichen.

**Tabelle 2**

| | EP (°C) | Penetration bei 25°C (1/10mm) | Brechungspunkt nach Fraaß (°C) | Duktilität bei 25°C (cm) | RTFOT-Test, EP und Verarbeitbarkeit nach 2,5h/200°C |
|---|---|---|---|---|---|
| Vergleichsbeispiel 3 -90 T Tallölpech +5T SBS + 5T Öl | 42 | 220 | -27 | 59 | >100°C; spröde, nicht verarbeitbar |
| Vergleichsbeispiel 4 - 90T Tallöpech gehärtet + 5T SBS + 5 T Öl | 64 | 120 | -29 | 54 | >100°C; spröde, nicht verarbeitbar |
| Beispiel 4 | 58 | 190 | -31 | 50 | 76°C gut verarbeitbar |
| Beispiel 5 | 65 | 140 | -29 | 48 | 82°C gut verarbeitbar |

### Beispiele 6 bis 10:

Mit 60 Gewichtsteilen eines Bindemittels gemäß den Beispielen 1 bis 5 wurden stabile, 50-60%ige wäßrige Emulsionen hergestellt, wobei als Emulgator in den Beispielen 6, 7, 9 und 10 je 4 Gewichtsteile Rohtallöl und im Beispiel 9 5 Gewichtsteile eines Kokosfettbetains TEGO-EK 7A (Fa. Goldschmidt AG) verwendet wurden. Als Laugenkomponente wurden 0,1 Gewichtsteile technischer Kalilauge, als Pigment 7 Gewichtsteile Bayferrox Rot 130 B (Fa. Bayer AG) eingesetzt.

### Beispiele 11 bis 13:

In den Beispielen 11 bis 13 wurden mit einem Gestein gemäß den nachfolgenden Siebdurchgängen Baustoffmischungen hergestellt.

| Siebdurchgang in Gewichtsteilen | | | | |
|---|---|---|---|---|
| mm | I | II | III | IV |
| 11 | | 100 | | 100 |
| 8 | | 99,9 | 100 | 93,3 |
| 4 | | 89,1 | 93 | 6,0 |
| 2 | | 47,3 | 67,5 | 1,3 |
| 1 | | 26,3 | 53,3 | 0,9 |
| 05 | | 14,0 | 38,4 | 0,5 |
| 025 | 100 | 8,8 | 23,3 | 0,5 |
| 0125 | 95,6 | 5,3 | 12,1 | 0,5 |
| 009 | 91,6 | 4,7 | 10,0 | 0,4 |
| Gew.-Teile | | | | |
| im Gestein | 8 | 13 | 14 | 65 |
| I-Kalkstein II-Dolomit III-Dolomit IV-Andezit | | | | |

### Beispiele 14 bis 18

Die gemäß den Beispielen 6 bis 10 hergestellten wäßrigen Emulsionen bilden nach Aufsprühen auf Beton, bituminöse Verkehrsflächen usw. einen sehr gut haftenden, homogenen Film mit guten mechanischen Eigenschaften.

Die Zusammensetzung der Baustoffmischungen, die Verarbeitungsbedingungen und die physikalisch-mechanischen Eigenschaften der erhaltenen Probekörper sind in der Tabelle 3 zusammengefaßt.

**Tabelle 3:**

| Beispiel | 11 | 12 | 13 |
|---|---|---|---|
| Bindemittel in Gew.-Teilen | 6,1 | 4,6 | 6,1 |
| gem.Beispiel | 4 | 5 | 6 |
| Gestein in Gew.-Teilen | 93,4 | 94,9 | 93,4 |
| Pigment in Gew.-Teilen | 0,5⁻¹⁾ | 0,5⁻²⁾ | 0,5⁻³⁾ |
| Verarbeitungstemperatur in °C | 135 | 135 | 135 |
| Rießwerte in mm | 4,1 | 3,0 | 4,4 |
| Tragwert in kN | 6,9 | 6,3 | 7,1 |
| Abrieb Praxistest | sehr gut | sehr gut | sehr gut |

| | | | |
|---|---|---|---|
| 1) Chromoxid Grün GN (Bayer AG) | | | |
| 2) Bayferrox Gelb 142 (Bayer AG) | | | |
| 3) Ultramarinblau 54 (Reckitt Colour S.A.) | | | |

## Patentansprüche

1. Bitumenfreies Bindemittel, insbesondere für Baustoffe wie Beläge für Verkehrsflächen, Sportflächen oder dgl., für Dichtungsmassen, Fugenvergußmassen, Isolieranstriche und Oberflächenbeschichtungen, dadurch gekennzeichnet, daß es im wesentlichen aus einem mit 0,1 bis 40 Gew.-Teilen Schwefel modifizierten Tallölpech besteht.

2. Bitumenfreies Bindemittel nach Anspruch 1, dadurch gekennzeichnet, daß es aus einem mit 1 bis 10 Gew.-Teilen Schwefel modifizierten Tallölpech besteht.

3. Bitumenfreies Bindemittel nach Anspruch 1 oder 2, dadurch gekennzeichnet, daß es zusätzlich bis zu 20 Gew.-Teile Zinkoxid als weiteres Modifizierungsmittel enthält.

4. Bitumenfreies Bindemittel nach Anspruch 3, dadurch gekennzeichnet, daß es zusätzlich 1 bis 10 Gew.-Teile Zinkoxid als weiteres Modifizierungsmittel enthält.

5. Bitumenfreies Bindemittel nach einem der Ansprüche 1 bis 4, dadurch gekennzeichnet, daß es zusätzlich bis zu 10 Gew.-Teile Vulkanisationsbeschleuniger, -regler, Oxidationsinhibitoren und/oder Haftvermittler enthält.

6. Bitumenfreies Bindemittel nach Anspruch 5, dadurch gekennzeichnet, daß es zusätzlich 0,1 bis 5 Gew.-Teile Vulkanisationsbeschleuniger, -regler, Oxidationsinhibitoren und/oder Haftvermittler enthält.

7. Bitumenfreies Bindemittel nach einem der Ansprüche 1 bis 6, dadurch gekennzeichnet, daß es zusätzlich bis zu 25 Gew.-Teile Kunststoffe, insbesondere thermoplastische Kunststoffe wie Styrolbutadienstyrolcopolymer, Polyethylen, Polypropylen, Polybutylen usw. enthält.

8. Bitumenfreies Bindemittel nach Anspruch 7, dadurch gekennzeichnet, daß es zusätzlich 5 bis 16 Gew.-Teile Kunststoffe, insbesondere thermoplastische Kunststoffe wie Styrolbutadienstyrolcopolymer, Polyethylen, Polypropylen, Polybutylen usw. enthält.

9. Bitumenfreies Bindemittel nach einem der Ansprüche 1 bis 8, dadurch gekennzeichnet, daß es zusätzlich bis zu 20 Gew.-Teile Öl, insbesondere naphthenisches Öl enthält.

10. Bitumenfreies Bindemittel nach Anspruch 9, dadurch gekennzeichnet, daß es zusätzlich 5 bis 10 Gew.-Teile Öl, insbesondere naphthenisches Öl enthält.

11. Bitumenfreies Bindemittel nach einem der Ansprüche 1 bis 10, dadurch gekennzeichnet, daß es zusätzlich 0,1 bis 25 Gew.-Teile Farbstoffe, insbesondere anorganische Pigmente enthält.

12. Bitumenfreies Bindemittel nach Anspruch 11, dadurch gekennzeichnet, daß es zusätzlich 1 bis 15 Gew.-Teile Farbstoffe, insbesondere anorganische Pigmente enthält.

13. Baustoffmischung mit einem der Bindemittel nach einem der Ansprüche 1 bis 12, dadurch gekennzeichnet, daß sie 20 bis 98 Gew.-Teile anorganische Zuschlagsstoffe mit einer Korngröße von 2 bis 32 mm enthält.

14. Baustoffmischung nach Anspruch 13, dadurch gekennzeichnet, daß sie 85 bis 97 Gew.-Teile anorganische Zuschlagsstoffe mit einer Korngröße von 2 bis 32 mm enthält.

15. Baustoffmischung nach Anspruch 13 oder 14, dadurch gekennzeichnet, daß die Zuschlagsstoffe eine Korngröße von 4 bis 16 mm aufweisen.

16. Baustoffmischung nach einem der Ansprüche 13 bis 15, dadurch gekennzeichnet, daß sie 10 bis 80 Gew.-Teile Gummigranulat mit einer Korngröße von 1 bis 50 mm enthält.

17. Baustoffmischung nach Anspruch 16, dadurch gekennzeichnet, daß sie 15 bis 25 Gew.-Teile Gummigranulat mit einer Korngröße von 1 bis 50 mm enthält.

18. Baustoffmischung nach Anspruch 16 oder 17, dadurch gekennzeichnet, daß das Gummigranulat eine Korngröße von 3 bis 10 mm aufweist.

19. Wäßrige Dispersion, insbesondere für die Verwendung als Isolieranstrich und Oberflächenbeschichtung, mit einem Bindemittel nach einem der Ansprüche 1 bis 12, dadurch gekennzeichnet, daß sie 30 bis 85 Gew.-Teile des Bindemittels, 2 bis 10 Gew.-Teile Tallöl oder andere geeignete Emulgatoren, gegebenenfalls 0,01 bis 0,1 Gew.-Teile Lauge, insbesondere Kalilauge, sowie gegebenenfalls weitere Zusatzstoffe, Rest Wasser enthält.

20. Wäßrige Dispersion nach Anspruch 19, dadurch gekennzeichnet, daß sie 40 bis 60 Gew.-Teile des Bindemittels enthält.

21. Wäßrige Dispersion nach Anspruch 19 oder 20, dadurch gekennzeichnet, daß sie 3 bis 5 Gew.-Teile Tallöl enthält.

22. Verfahren zur Herstellung eines modifizierten Tallölpeches, dadurch gekennzeichnet, daß man 100 Gew.-Teile Tallölpech mit 0,1 bis 40 Gew.-Teilen Schwefel auf 80 bis 250°C erhitzt.

23. Verfahren nach Anspruch 22, dadurch gekennzeichnet, daß man 100 Gew.-Teile Tallölpech mit 1 bis 10 Gew.-Teilen Schwefel auf 80 bis 250°C erhitzt.

24. Verfahren nach Anspruch 22 oder 23, dadurch gekennzeichnet, daß man das Erhitzen bei einer Temperatur von 100 bis 160°C durchführt.

25. Verfahren nach einem der Ansprüche 22 bis 24, dadurch gekennzeichnet, daß man zusätzlich bis zu 20 Gew.-Teile Zinkoxid je 100 Gew.-Teile Tallölpech zusetzt.

26. Verfahren nach Anspruch 25, dadurch gekennzeichnet, daß man zusätzlich 1 bis 10 Gew.-Teile Zinkoxid je 100 Gew.-Teile Tallölpech zusetzt.

## Claims

1. A bitumen-free binder, especially for building materials such as surfacing for traffic areas, sports grounds or the like, for sealing compounds, jointing compounds, insulating paints and surface coatings, characterized in that it consists essentially of a tall oil pitch modified with 0,1 to 40 parts by weight sulphur.

2. A bitumen-free binder as claimed in claim 1, characterized in that it consists of a tall oil pitch modified with 1 to 10 parts by weight sulphur.

3. A bitumen-free binder as claimed in claim 1 or claim 2, characterized in that it further comprises up to 20 parts by weight zinc oxide as additional modifying agent.

4. A bitumen-free binder as claimed in claim 3, characterized in that it further comprises 1 to 10 parts by weight zinc oxide as additional modifying agent.

5. A bitumen-free binder as claimed in any one of claims 1 to 4, characterized in that it further comprises up to 10 parts by weight vulcanisation accelerator, vulcanisation controller, oxidation inhibitors and/or bonding agents.

6. A bitumen-free binder as claimed in claim 5, characterized in that it further comprises 0,1 to 5 parts by weight vulcanization accelerator, vulcanization controller, oxidation inhibitors and/or bonding agents.

7. A bitumen-free binder as claimed in any one of claims 1 to 6, characterized in that it further comprises up to 25 parts by weight plastics, especially thermoplastic resins such as styrene butadiene styrene copolymer, polyethylene, polypropylene, polybutylene, etc.

8. A bitumen-free binder as claimed in claim 7, characterized in that it further comprises 5 to 16 parts by weight plastics, especially thermoplastic resins such as styrene butadiene styrene copolymer, polyethylene, polypropylene, polybutylene, etc.

9. A bitumen-free binder as claimed in any one of claims 1 to 8, characterized in that it further comprises up to 20 parts by weight oil, specially naphthenic oil.

10. A bitumen-free binder as claimed in claim 9, characterized in that it further comprises 5 to 10 parts by weight oil, especially a naphthenic oil.

11. A bitumen-free binder as claimed in any one of claims 1 to 10, characterized in that it further comprises 0,1 to 25 parts by weight dyes, especially inorganic pigments.

12. A bitumen-free binder as claimed in claim 11, characterized in that it further comprises 1 to 15 parts by weight dyes, especially inorganic pigments.

13. Building material mixture comprising a binder as claimed in any one of claims 1 to 12, characterized in that it contains 20 to 98 parts by weight of inorganic aggregates having a particle size of 2 to 32 mm.

14. Building material mixture as claimed in claim 13, characterized in that it contains 85 to 97 parts by weight of inorganic aggregates having a particle size of 2 to 32 mm.

15. Building material mixture as claimed in claim in claim 13 or claim 14, characterized in that the aggregates have a particle size of 4 to 16 mm.

16. Building material mixture as claimed in any one of claims 13 to 15, characterized in that it contains 10 to 80 parts by weight rubber granulate having a particle size of 1 to 50 mm.

17. Building material mixture as claimed in claim 16, characterized in that it contains 15 to 25 parts by weight rubber granulate having a particle size of 1 to 50 mm.

18. Building material mixture as claimed in claim 16 or claim 17, characterized in that the rubber granulate has a particle size of 3 to 10 mm.

19. Aqueous dispersion, especially for use as an insulating paint and surface coating, comprising a binder as claimed in any one of claims 1 to 12, characterized in that it contains 30 to 85 parts by weight of the binder, 2 to 10 parts by weight tall oil or another suited emulsifier, optionally 0,01 to 0,1 parts by weight alkaline solution, especially potassium hydroxide, and optionally further additives, the remainder being water.

20. Aqueous dispersion as claimed in claim 19, characterized in that it contains 40 to 60 parts by weight of the binder.

21. Aqueous dispersion as claimed in claim 19 or claim 20, characterized in that it contains 3 to 5 parts by weight tall oil.

22. Method of preparing a modified tall oil pitch, characterized in heating 100 parts by weight tall oil pitch with 0,1 to 40 parts by weight sulphur up to a temperature of 80 to 250°C.

23. Method as claimed in claim 22, characterized in that 100 parts by weight tall oil pitch are heated with 1 to 10 parts by weight sulphur to 80 to 250°C.

24. Method as claimed in claim 22 or claim 23, characterized in that the heating is conducted at a temperature of 100 to 160°C.

25. Method as claimed in any one of claims 22 to 24, characterized in that up to 20 parts by weight zinc oxide are added per 100 parts by weight tall oil pitch.

26. Method as claimed in claim 25, characterized in that 1 to 10 parts by weight zinc oxide are added per 100 parts by weight tall oil pitch.

## Revendications

1. Agent liant exempt de bitume, en particulier pour des matériaux de construction tels que des revêtements pour voies de circulation, terrains de sports ou autres, pour des masses d'étanchéité, des masses de jointoyage, des enduits isolants et des revêtements de surface, caractérisé par le fait qu'il est essentiellement constitué par de la résine d'huile de pin modifiée avec 0,1 à 40 parties en poids de soufre.

2. Agent liant exempt de bitume selon la revendication 1, caractérisé par le fait qu'il est constitué par de la résine d'huile de pin modifiée avec 1 à 10 parties en poids de soufre.

3. Agent liant exempt de bitume selon la revendication 1 ou 2, caractérisé par le fait qu'il contient en outre jusqu'à 20 parties en poids d'oxyde de zinc en tant qu'agent modifiant supplémentaire.

4. Agent liant exempt de bitume selon la revendication 3, caractérisé par le fait qu'il contient en outre 1 à 10 parties en poids d'oxyde de zinc en tant qu'agent modifiant supplémentaire.

5. Agent liant exempt de bitume selon l'une quelconque des revendications 1 à 4, caractérisé par le fait qu'il contient en outre jusqu'à 10 parties en poids d'accélérateur de vulcanisation, de régulateur de vulcanisation, d'inhibiteur d'oxydation et/ou d'agent d'adhérence.

6. Agent liant exempt de bitume selon la revendication 5, caractérisé par le fait qu'il contient en outre 0,1 à 5 parties en poids d'accélérateur de vulcanisation, de régulateur de vulcanisation, d'inhibiteur d'oxydation et/ou d'agent d'adhérence.

7. Agent liant exempt de bitume selon l'une quelconque des revendications 1 à 6, caractérisé par le fait qu'il contient en outre jusqu'à 25 parties en poids de matière plastique, en particulier de matière thermoplastique telle qu'un copolymère styrène-butadiène-styrène, du polyéthylène, du polypropylène, du polybutylène, etc.

8. Agent liant exempt de bitume selon la revendication 7, caractérisé par le fait qu'il contient en outre 5 à 16 parties en poids de matière plastique, en particulier de matière thermoplastique telle qu'un copolymère styrène-butadiène-styrène, du polyéthylène, du polypropylène, du polybutylène, etc.

9. Agent liant exempt de bitume selon l'une quelconque des revendications 1 à 8, caractérise par le fait qu'il contient en outre jusqu'à 20 parties en poids d'huile, en particulier d'huile naphténique.

10. Agent liant exempt de bitume selon la revendication 9, caractérisé par le fait qu'il contient en outre 5 à 10 parties en poids d'huile, en particulier d'huile naphténique.

11. Agent liant exempt de bitume selon l'une quelconque des revendications 1 à 10, caractérisé par le fait qu'il contient en outre 0,1 à 25 parties en poids de colorant, en particulier de pigment inorganique.

12. Agent liant exempt de bitume selon la revendication 11, caractérisé par le fait qu'il contient en outre 1 à 15 parties en poids de colorant, en particulier de pigment inorganique.

13. Mélange de matériaux de construction avec un liant selon l'une quelconque des revendications 1 à 12, caractérisé par le fait qu'il contient 20 à 98 parties en poids d'agrégats inorganiques ayant une taille de grains de 2 à 32 mm.

14. Mélange de matériaux de construction selon la revendication 13, caractérisé par le fait qu'il contient 85 à 97 parties en poids d'agrégats inorganiques ayant une taille de grains de 2 à 32 mm.

15. Mélange de matériaux de construction selon la revendication 13 ou 14, caractérisé par le fait que les agrégats présentent une taille de grains de 4 à 16 mm.

16. Mélange de matériaux de construction selon l'une quelconque des revendications 13 à 15, caractérisé par le fait qu'il contient 10 à 80 parties en poids de caoutchouc granulé ayant une taille de grains de 1 à 50 mm.

17. Mélange de matériaux de construction selon la revendication 16, caractérisé par le fait qu'il contient 15 à 25 parties en poids de caoutchouc granulé ayant une taille de grains de 1 à 50 mm.

18. Mélange de matériaux de construction selon l'une des revendications 16 ou 17, caractérisé par le fait que le caoutchouc granulé présente une taille de grains de 3 à 10 mm.

19. Dispersion aqueuse, destinée en particulier à être utilisée comme enduit isolant et revêtement de surface, avec un liant selon l'une quelconque des revendications 1 à 12, caractérisée par le fait qu'elle contient 30 à 85 parties en poids du liant, 2 à 10 parties en poids d'huile de pin ou d'autres émulsifiants appropriés, éventuellement 0,01 à 0,1 partie en poids d'alcali, en particulier de potasse, ainsi qu'éventuellement d'autres additifs, le reste étant de l'eau.

20. Dispersion aqueuse selon la revendication 19, caractérisée par le fait qu'elle contient 40 à 60 parties en poids du liant.

21. Dispersion aqueuse selon la revendication 19 ou 20, caractérisée par le fait qu'elle contient 3 à 5 parties en poids d'huile de pin.

22. Procédé de préparation d'une résine d'huile de pin modifiée, caractérisé par le fait que l'on chauffe 100 parties en poids de résine d'huile de pin avec 0,1 à 40 parties en poids de soufre à une température de 80 à 250°C.

23. Procédé selon la revendication 22, caractérisé par le fait que l'on chauffe 100 parties en poids de résine d'huile de pin avec 1 à 10 parties en poids de soufre, à une température de 80 à 250°C.

24. Procédé selon la revendication 22 ou 23, caractérisé par le fait que l'on effectue le chauffage à une température de 100 à 160 °C.

25. Procédé selon l'une quelconque des revendications 22 à 24, caractérisé par le fait que l'on ajoute en outre jusqu'à 20 parties en poids d'oxyde de zinc pour 100 parties en poids de résine d'huile de pin.

26. Procédé selon la revendication 25, caractérisé par le fait que l'on ajoute en outre 1 à 10 parties en poids d'oxyde de zinc pour 100 parties en poids de résine d'huile de pin.
